# FASCICULE DE BREVET EUROPEEN

(11) **EP 0 630 390 B1**
(45) Date de publication et mention de la délivrance du brevet: **25.09.1996**
(21) Numéro de dépôt: 94904667.6
(22) Date de dépôt: 12.01.1994
(51) Int. Cl.: C08G 73/08

(54) **COPOLYOXADIAZOLES DE TYPE BLOC ET LEUR PROCEDE DE SYNTHESE**
BLOCK-COPOLYOXADIAZOLE UND VERFAHREN ZUR SYNTHESE
BLOCK COPOLYOXADIAZOLES AND SYNTHESIS METHOD THEREFOR

(30) Priorité: 13.01.1993 FR 9300257
(43) Date de publication de la demande: 28.12.1994
(73) Titulaire: ELF ATOCHEM S.A., F-92091 Paris Cédex 42 (FR)
(72) Inventeur: BRIFAUD, Thierry, F-85190 Aizenay (FR); SAGE, Jean-Marc, F-69600 Oullins (FR)
(86) Numéro de dépôt international: FR9400037
(87) Numéro de publication internationale: WO9415994

(56) Documents cités:
- DE-A- 1 520 449
- DE-A- 2 153 642
- US-A- 3 275 608
- JOURNAL OF POLYMER SCIENCE: PART A, vol.2, no.3, Mars 1964 pages 1137 - 1145 A.H. FRAZER ET AL. 'Aliphatic Polyhydrazides: A New Low Temperature Solution Polymerization' cité dans la demande
- DATABASE WPI Week 8826, Derwent Publications Ltd., London, GB; AN 88-180126 & JP,A,63 118 331 (IDEMITSU KOSAN KK)
- JOURNAL OF POLYMER SCIENCE: PART A : POLYMER CHEMISTRY, vol.26, no.1, Janvier 1988 pages 159 - 166 M. UEDA ET AL. 'Synthesis of Poly(1,3,4-oxadiazole)s by Direct Polycondensation of Dicarboxylic Acids with Hydrazine Sulfate Using Phosphorus Pentoxide/Methanesulfonic Acid as Condensing Agent and Solvent' cité dans la demande

## Description

La présente invention concerne des copolyoxadiazoles de type bloc de formule : 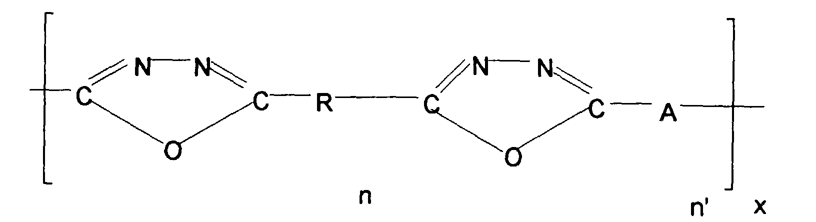 dans laquelle :
- R représente un reste aliphatique, A un reste romatique
- x est tel que la viscosité inhérente en décilitres par gramme est supérieure à 0,6
- n et n' sont supérieurs ou égaux à 2
et ayant deux températures de transition vitreuse.

H. FRAZER (Journal Of Polymer Science (A2)p 1137-1160 (1964)) a décrit la synthèse de copolyoxadiazoles par réaction de chlorure de diacide sur un dérivé dihydrazide d'un autre diacide selon le schéma (1) dans l'acide sulfurique : 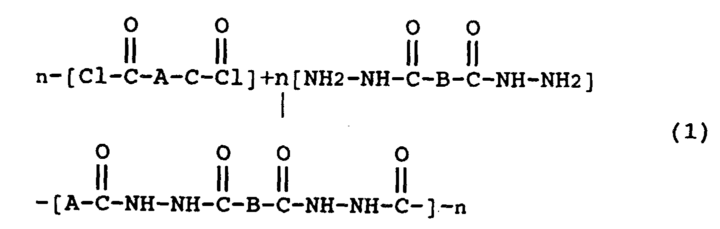 on obtient ainsi un polyhydrazide qui est isolé puis traité thermiquement pour obtenir la forme cyclisée oxadiazole (formule 2)

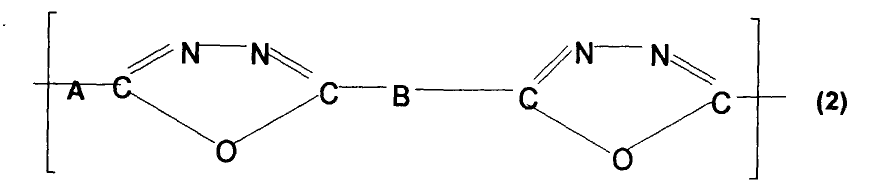

La structure est alternée, un motif B suit un motif A.

UEDA et SUGITA (Journal of Polymer Science A26, 159 (1988)) décrivent la synthèse de polyoxadiazoles en une seule étape a partir des diacides et de sulfate d'hydrazine dans le solvant acide méthane sulfonique en présence d'anhydride phosphorique.

Les polyoxadiazoles obtenus à partir de diacides aromatiques présentent une stabilité thermique élevée et sont des matériaux possédant une rigidité élevée. Toutefois ces matériaux sont en général infusibles car leur point de fusion est située au delà de 400° C.

L'introduction de segments aliphatiques, par l'emploi de mélange de diacides aromatiques et de diacides aliphatiques conduit à abaisser le point de fusion des copolyoxadiazoles. KORSHAK (Vysokomol Soed. B 10(8) 568 (1988) et Polymer Science of USSR 8, 883 (1966)) a préparé des copolyoxadiazoles de type alterné, c'est à dire que les motifs alphatiques et les motifs aromatiques sont répartis de façon alternée.

Les points de fusion sont les suivants :

| COPOLYMERS | POINT DE FUSION en °C |
|---|---|
| 6/I | 180 |
| 6/T | 240 |
| 10/I | 100 |
| 10/T | 220 |

6 et 10 désignent le nombre de carbones du motif aliphatique, (I) l'acide isophtalique et (T) l'acide terephtalique, les motifs aliphatiques et aromatiques sont séparés par les motifs oxadiazoles

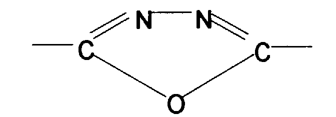

Pour chaque copolymère on ne trouve qu'une température de transition vitreuse (Tg) et qu'une température de fusion.

La synthèse selon KORSHAK se fait soit par réaction de dichloranhydrides d'acides dicarboxyliques aliphatiques avec des dihydrazides d'acides dicarboxyliques aromatiques soit par réaction de dichloranhydrides d'acides dicarboxyliques aromatiques avec des dihydrazides d'acides dicarboxyliques aliphatiques.

Ces polyoxadiazoles et copolyoxadiazoles à motifs aliphatiques et aromatiques alternés sont soit cristallins soit amorphes. Il ne possèdent pas les propriétés des matériaux élastomères.

On a maintenant trouvé des copolyoxadiazoles de type blocs ayant deux températures de transition vitreuse ayant des propriétés élastomériques.

Plus précisément l'invention concerne des copolyoxadiazoles de type blocs de formule : 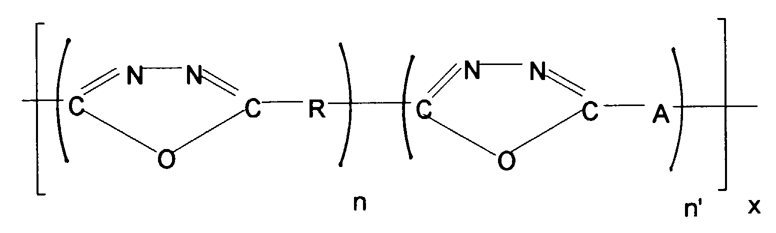 dans laquelle :
- R représente un reste aliphtalique, A un reste aromatique
- n et n' sont supérieur ou égaux à 2
- x est tel que la viscosité inhérente (mesurée dans l'acide méthane sulfonique à 0,2 g par décilitre à 30° C) en décilitres par grammes est supérieure à 0,6 et ayant deux températures de transition vitreuse.

Par simplification on appelle :
les blocs aliphatiques oxadiazoles 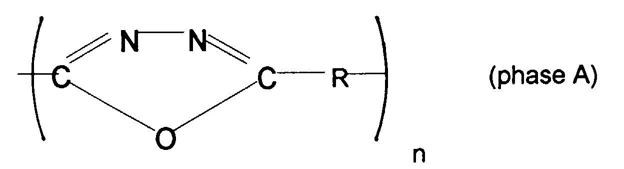 et les blocs aromatiques oxadiazoles

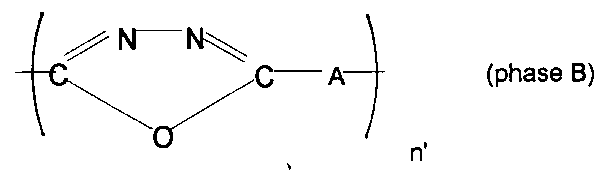

On observe donc sur l'analyse thermique différentielle des transitions différentes correspondant aux transitions propres Tf et Tg (Tf désigne la température de fusion) de chacune des deux phases. Ce qui les différencient des copolymères de type alternés qui ne présentent donc qu'une température de transition vitreuse (Tg) équivalente à environ la moyenne pondérale des Tg des deux phases A et B

n et n' sont de préférence compris entre 3 et 20.

Le résidu R représente une chaîne aliphatique linéaire ou ramifiée.

Cette phase A a avantageusement une température de transition vitreuse de (TgA) comprise entre -50 et +50° C et une température de fusion située entre +50 et +150° C (TfA).

R peut représenter un reste ayant de 2 à 20 atomes de carbone.

R peut aussi représenter plusieurs restes aliphatiques c'est à dire que dans un même bloc il peut y avoir plusieurs R différents.

Quant aux résidus A, on les définit à partir des diacides aromatiques par enlèvement des groupes -COOH.

Ces diacides aromatiques peuvent être diversement substitués.

On préfère l'acide isophtalique ou ses mélanges avec l'acide téréphtalique jusqu'en une proportion ne provoquant pas un cristallisation de la phase B. On préfère aussi les acides dicarboxy 4,4' diphenyl éther ainsi que l'acide 1,3,5 tertiobutyleisophtalique seuls ou en mélange avec les acides iso et terephtaliques avec les mêmes limitations.

La phase B est caractérisée par un état amorphe défini par l'absence d'un point de fusion après la Tg de celle-ci, le point de fusion étant détecté par analyse DSC comme une endotherme d'enthalpie supérieure à 2 calories par gramme et C°.

La Tg de ces phases B varie typiquement de 180 à 300°C (Tg B)

Les copolymères de l'invention présentent de façon surprenante par rapport à l'art antérieur des propriétés de type élastomériques dans une gamme élevée de température. De plus des propriétés typiques de matériaux à mémoire de forme ont été mises en évidence.

Aussi on a mis en évidence que les copolymères de l'invention pouvaient être mis en forme par moulage ou compression à une température supérieure ou égale à Tg B (soit l'état initial EO). Le matériau peut ensuite subir à une température comprise entre Tf A et Tg B une déformation par compression ou étirement (100 % et plus) conduisant à un état déformé E1 stable en dessous de Tf A.

Lorsque ce matériau est réchauffé à une température supérieure ou égale à Tf A il reprend rapidement son état dimensionnel initial Eo. Plusieurs cycles déformation/recuit peuvent être ainsi effectués.

Pour les copolymères de l'invention ne présentant pas de température de fusion Tf A les opérations de déformation doivent être effectuées en dessous de Tg A et le recuit (recouvrement de l'état initial) au dessus de Tg A.

Les copolyoxadiazoles de l'invention peuvent être préparés par réaction :
(i) du diacide HOOC-A-COOH
   avec (ii) le dihydrazide 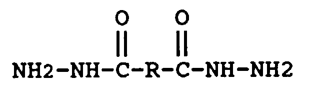 ou le diacide HOOC-R-COOH
(iii) en présence d'un acide sulfonique et d'anhydride phosphorique
(iv) en présence d'une quantité de sulfate d'hydrazine telle que le nombre de moles d'hydrazine plus le nombre de moles de dihydrazides soit au moins égal au nombre de moles de diacides. C'est à dire que si on utilise que du dihydrazide aliphatique il n'est pas nécessaire d'ajouter de l'hydrazine.

Bien qu'on puisse prendre tout acide sulfonique il est plus simple d'utiliser l'acide méthane sulfonique.

On peut aussi préparer les dihydrazides in situ par réaction des diacides correspondant avec du sulfate d'hydrazine.

### EXEMPLES

Dans les exemples suivants la partie aliphatique correspond à HOOC-(CH₂)₁₀-COOH et la partie aromatique à l'acide isophtalique.

### EXEMPLE 1 - MODE OPERATOIRE A :

Dans un réacteur en verre muni d'un agitateur on introduit 100 ml d'acide méthane sulfonique. On ajoute ensuite 15 g d'anhydride phosporique (P2O5) soit 10 %. On porte, afin de faciliter la dissolution de P2O5, la température à 80° C pendant 10 min.

On ramène ensuite la température à 60° C puis l'on introduit le mélange de diacides désiré puis la quantité de sulfate d'hydrazine, nécessaire.

Le mélange réactionnel est alors porté à 90° pendant 4 h. Au bout de ce temps le mélange est refroidi à température ambiante puis versé lentement dans 100 ml de N.méthylpyrollidone. On observe alors la précipitation du polymère qui est ensuite filtré, lavé à l'eau puis à l'éthanol puis séché.

Les résultats sont reportés dans le tableau 1.

### EXEMPLES 2 ET 3 - MODE OPERATOIRE B :

Les conditions opératoires sont similaires à celles du mode opératoire A sauf que, à la place du mélange de diacide et de l'hydrazine, on emploie le diacide aliphatique sous sa forme dihydrazide auquel on ajoute en quantité stoechiométrique le diacide aromatique dans le système réactionnel.

Les résultats sont reportés dans le tableau 1.

### EXEMPLES 4 ET 5 - MODE OPERATOIRE C (COMPARATIFS) :

On opère de manière identique au mode opératoire B décrit précédemment en partant cette fois du dihydrazide du diacide aromatique : 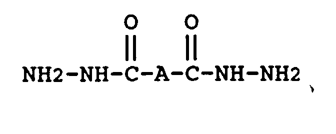 et du diacide aliphatique.

La concentration totale des diacides dans le solvant étant de 0,5 mol/litre.

Les résultats sont reportés sur le tableau 1.

| Exemple | nombre de moles | | TgA (TgB) | TfA | viscosité inhérente | tel que mesuré par analyse RMN | |
|---|---|---|---|---|---|---|---|
| | R | A | | | | n | n' |
| 1 | 50 | 50 | -10°C (+250°C) | +100°C | | 3,3 | 3,3 |
| 2 | 75 | 25 | -0°C (+220°C) | +90°C | 1,4 | 13,3 | 4,3 |
| 3 | 50 | 50 | -10°C (+255°C) | +104°C | | 7 | 7 |
| 4 | 50 | 50 | +40°C | non détectéé | | 1,4 | 1,4 |
| 5 | 75 | 25 | 0°C | +90°C | 1,4 | 3 | 1 |

La viscosité inhérente (en dl/g) est mesurée à la concentration 0,2 g par décilitre d'acide méthane sulfonique.

## Revendications

1. Copolyoxadiazoles de type bloc de formule : 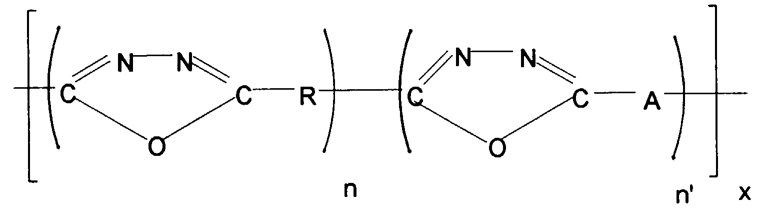 dans laquelle :
- R représente un reste aliphatique, A un reste aromatique
- x est tel que la viscosité inhérente (mesurée dans l'acide méthane sulfonique à 0,2 g par décilitre à 30° C) en décilitres par gramme est supérieure à 0,6
- n et n' sont supérieurs ou égaux à 2
et ayant deux températures de transition vitreuse.

2. Produits selon la revendication 1 caractérisés en ce que n et n' sont compris entre 3 et 20.

3. Produits selon la revendication 1 ou 2 caractérisés en ce que R est un reste ayant 2 à 20 atomes de carbone.

4. Produits selon l'une des revendication 1 à 3 caractérisés en ce que A est le reste de l'acide isophtalique ou téréphtalique ou leur mélange par enlèvement des groupes COOH.

5. Procédé de préparation des copolyoxadiazoles selon l'une des revendications 1 à 4 caractérisé en ce qu'on met en contact (i) du diacide HOOC-A-COOH
avec (ii) le dihydrazide : 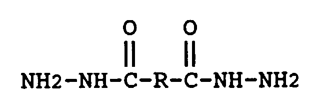 ou le diacide HOOC-R-COOH
(iii) en présence d'un acide sulfonique et d'anhydride phosphorique.
(iv) en présence d'une quantité de sulfate d'hydrazine telle que le nombre de moles d'hydrazine plus le nombre de moles de dihydrazides soit au moins égal au nombre de moles de diacides.

6. Procédé selon la revendication 5 caractérisé en ce que l'acide sulfonique est l'acide méthane sulfonique.

7. Procédé selon la revendication 5 ou 6 caractérisé en ce que les dihydrazides peuvent être préparés in situ par réaction du diacide correspondant et du sulfate d'hydrazine.

## Patentansprüche

1. Oxadiazol-Blockcopolymere der Formel 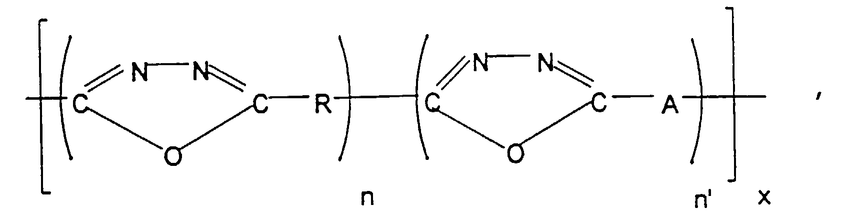 in der bedeuten:
- R einen aliphatischen Rest und A einen aromatischen Rest,
- x eine solche Zahl, daß die in Deziliter pro Gramm angegebene Inherent-Viskosität (gemessen in Methansulfonsäure, 0,2 g Blockcopolymer pro Deziliter, bei 30 °C) größer als 0,6 ist,
- n und n' Zahlen größer als oder gleich 2,
und die zwei verschiedene Glasübergangstemperaturen aufweisen.

2. Oxadiazol-Blockcopolymere nach Anspruch 1, dadurch gekennzeichnet, daß n und n' Zahlen im Bereich von 3 bis 20 sind.

3. Oxadiazol-Blockcopolymere nach Anspruch 1 oder 2, dadurch gekennzeichnet, daß R ein Rest mit 2 bis 20 Kohlenstoffatomen ist.

4. Oxadiazol-Blockcopolymere nach einem der Ansprüche 1 bis 3, dadurch gekennzeichnet, daß A der durch Entfernen der Gruppen -COOH erhaltene Rest der Isophthalsäure oder Terephthalsäure oder eines Gemischs von Isophthalsäure und Terephthalsäure ist.

5. Verfahren zur Herstellung der Oxadiazol-Blockcopolymere nach einem der Ansprüche 1 bis 4, dadurch gekennzeichnet, daß in Kontakt gebracht werden:
(i) eine Dicarbonsäure HOOC-A-COOH mit
(ii) dem Dihydrazid 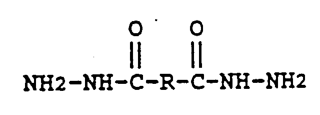 oder der Dicarbonsäure HOOC-R-COOH
(iii) in Gegenwart einer Sulfonsäure und von Phosphor pentoxid
(iv) in Gegenwart einer Menge an Hydrazinsulfat, die so groß ist, daß die Summe aus in Mol angegebener Menge an Hydrazin und in Mol angegebener Menge an Dihydrazid mindestens so groß ist wie die in Mol angegebene Menge an Dicarbonsäuren.

6. Verfahren nach Anspruch 5, dadurch gekennzeichnet, daß es sich bei der Sulfonsäure um Methansulfonsäure handelt.

7. Verfahren nach Anspruch 5 oder 6, dadurch gekennzeichnet, daß die Dihydrazide in situ hergestellt werden können durch Umsetzung der entsprechenden Dicarbonsäure mit Hydrazinsulfat.

## Claims

1. Copolyoxadiazoles of block type of formula : 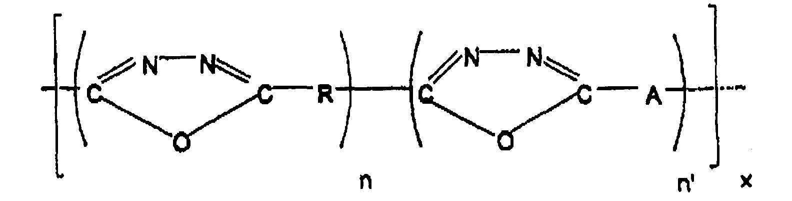 in which:
- R represents an aliphatic residue, A an aromatic residue
- x is such that the inherent viscosity (measured in methanesulphonic acid at a concentration of 0.2 g per decilitre at 30°C) in decilitres per gram is greater than 0.6
- n and n' are greater than or equal to 2
and having two glass transition temperatures.

2. Products according to Claim 1, characterized in that n and n' are between 3 and 20.

3. Products according to Claim 1 or 2, characterized in that R is a residue having 2 to 20 carbon atoms.

4. Products according to one of Claims 1 to 3, characterized in that A is the isophthalic or terephthalic acid residue or their mixture by removal of the COOH groups.

5. Process for the preparation of the copolyoxadiazoles according to one of Claims 1 to 4, characterized in that
(i) diacid HOOC-A-COOH is placed in contact with
(ii) the dihydrazide: 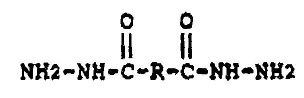 or the
diacid HOOC-R-COOH
(iii) in the presence of a sulphonic acid and phosphoric anhydride
(iv) in the presence of an amount of hydrazine sulphate such that the number of moles of hydrazine plus the number of moles of dihydrazides is at least equal to the number of moles of diacids.

6. Process according to Claim 5, charac-terized in that the sulphonic acid is methanesulphonic acid.

7. Process according to Claim 5 or 6, characterized in that the dihydrazides may be prepared in situ by reaction of the corresponding diacid and hydrazine sulphate.
